Europäisches Patentamt

(19) **European Patent Office**

Office européen des brevets

(11) Publication number: **0 189 235 B1**

(12) ## EUROPEAN PATENT SPECIFICATION

(45) Date of publication of patent specification: 06.03.91    (51) Int. Cl.5: **A01B 63/00**, A01B 49/00, A01B 63/111

(21) Application number: **86200100.5**

(22) Date of filing: **22.01.86**

Divisional application 88202450.8 filed on 22/01/86.

(54) **Soil cultivating implement.**

(30) Priority: **24.01.85 NL 8500187**

(43) Date of publication of application:
**30.07.86 Bulletin  86/31**

(45) Publication of the grant of the patent:
**06.03.91 Bulletin  91/10**

(84) Designated Contracting States:
**DE FR GB NL**

(56) References cited:
**DE-A- 1 632 779**
**DE-A- 2 310 682**
**NL-A- 7 506 652**

(73) Proprietor: **C. van der Lely N.V.**
**Weverskade 10 P.O. Box 26**
**NL-3155 ZG Maasland(NL)**

(72) Inventor: **Van der Lely, Ary**
**10A Weverskade**
**Maasland(NL)**
Inventor: **Bom, Cornelis Johannes Gerardus**
**16 Laan van Nieuw Rozenburg**
**Rozenburg(NL)**

(74) Representative: **Mulder, Herman et al**
**Octrooibureau Van der Lely N.V. Weverskade**
**10 P.O. Box 26**
**NL-3155 ZG Maasland(NL)**

## Description

The invention relates to a soil cultivating implement, comprising a number of soil working members, which members are juxtaposed and placed in a row that extends transversely to the intended direction of travel (A) of the implement, the soil working members being supported in a frame portion that extends transversely to the intended direction of travel (A) and by means of at least two spaced apart pairs of axes is connected to at least one transverse beam of a support frame, so as to be upwardly and downwardly movable during operation, the said support frame being provided with coupling means situated in front of the frame portion with respect to the intended direction of travel (A) for linkage to the lift system of a tractor.

Implements of this kind are known from the Dutch Patent Specification 7506652 correspondent to GB-A-1541307 and GB-A-1541308. This application discloses a soil cultivating implement that is well suited to be used on soils that contain a considerable amount of hard objects such as stones or rocks. However, in this known implement the arrangement of the frame portions by means of the parallelograms results in a construction whereby the roller lies rather far to the rear so that a combination of the implement with another machine, such as a seed drill, can load the three-point lifting hitch of a tractor in an unfavourable way.

The invention now seeks to maintain the advantages of the aforementioned construction without the mentioned disadvantage. This can be achieved with the constructive suggestion according the characteristic part of the new claim 1. By means of this construction a simple, compact and yet reliable support for the frame portion can be achieved, which enables the frame portion together with the soil working members to deflect when the soil working members hit a stone or rock buried in the soil.

On the basis of some embodiments, shown in the figure, the invention will be further explained hereafter.

Figure 1 shows a plan view of a soil cultivating implement, in particular for preparing a seed bed, comprising the specific features according to the invention.

Figure 2 shows a view according to arrow II in Figure 1, with a part of a supporting member being omitted for the sake of clarity.

Figure 3 shows, on a larger scale, a view according to arrow III in Figure 1.

Figure 4 shows a view according to arrow IV in Figure 3.

The construction shown in the Figures relates to a soil cultivating implement, in particular for preparing a seed bed.

The implement comprises a support frame, extending transversely to the intended direction of travel A, comprising one single frame beam 1, extending at least substantially transversely to the intended direction of travel of the machine and situated at least substantially in a horizontal plane. At some distance from the centre, support beams 2, of U-profile-like formation and extending to the intended direction of travel A of the implement, are fitted on both sides of the support frame on the upper part of the frame beam 1. The support beams 2 are connected at the front with the lowermost part of upwardly extending supports 3 of a rectangular trestle 4. The upwardly extending supports 3 are interconnected on the uppermost part by means of a connection beam 5, extending transversely to the intended direction of travel A and situated at least substantially in a horizontal plane. Between the supports 3 and the connection beam 5, supports 6 are provided in the corners of the trestle 4. The connection beam 5 is connected with the uppermost part of the frame beam 1 by means of diverging supports 7, extending downwardly and rearwardly in an oblique plane. The trestle 4 comprises a three-point hitch for linkage to the three-point lifting device of a tractor.

Two fixation points, constituted by plates 8 are provided at the level of the support beams 2 at the front of the supports 3, while a third fixation point, constituted by plates 9 is provided near the middle of the connection beam 5 at its front.

The extremities of the frame beam 1 are fitted with supports 10, extending obliquely downwardly and rearwardly. Similar supports 10 are fixed spaced apart, on both sides of the middle of the frame beam 1. Between the lower extremities of the respective supports 10, a freely rotatable roller 12, resp. 13 is comprised by means of shafts 11 and bearings. The rollers, thus mounted to the frame beam 1, may be of a design as shown for the roller 12, right hand when viewed in intended direction of travel, i.e. in the version of a packer roller. However, the rollers may also be of a design as shown by means of the left hand roller 13, i.e. a roller comprising on its circumference longitudinal elements, being of rod-like formation and extending helically.

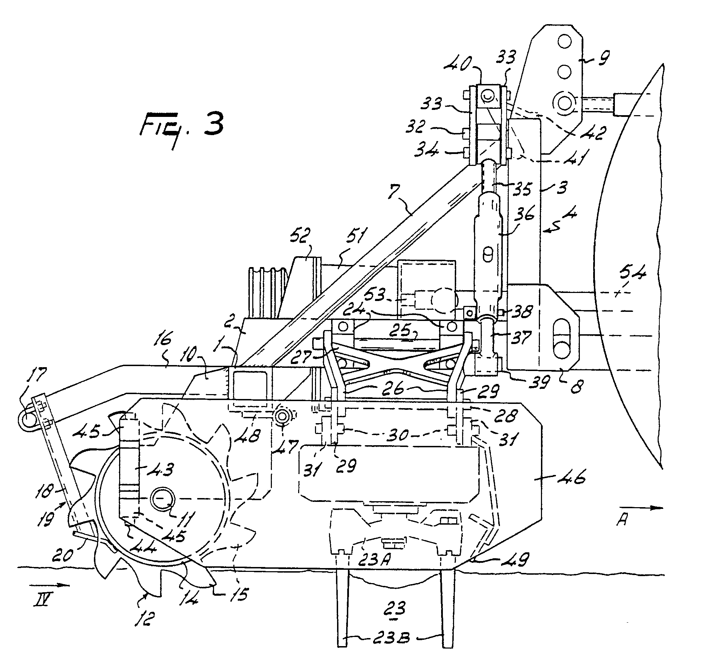

The packer roller 12 comprises a cylindrical support 14, on which crenelated tines 15 are provided in an arrangement with equal spacings. Between the supports 10, a support 17 is fitted, by means of clamp brackets, to the frame beam 1 by means of arms 16, which support, when seen in plan view, is situated behind the axis of rotation of the roller 12. To the support 17, arms 18, extending downwardly, for scrapers 19 are fixed. The scrapers 19 comprise a scraping plate section 20, fitted to the lowermost part of the arms 18. Each plate section 20 extends to the proximity of the crenelated tines 15, whereby the sides directed towards the crenelated tines 15 will extends initially at least substantially parallel, as seen from the rear to the front, to incline subsequently into converging sides, all this in such a way that a V-shaped section will arise, directed obliquely forwardly and downwardly, leaning against the periphery of the cylindrical support 14 in a point where a radian embraces an angle of $+ 45°$ with the vertical, resp. horizontal plane via the axis of rotation of the roller (fig. 3).

As mentioned before, the frame beam 1 forms part of a support frame, connected with the rectangular trestle 4 by means of the support beams 2, extending in the intended direction of travel A, whereby the support frame is supported during machine operation by means of supporting members afforded by the rollers 12, resp. 13, which occupy a fixed position with respect to the support frame. The support frame, supported during machine operation by means of the rollers 12, resp. 13 and trestle 4, provides a support to a box-like frame beam 21, fitted to the support beams 2, beam 21 comprising soil working members 23, rotating about preferably vertical shafts 22, directed upwardly, these soil working members being arranged at an equal mutual spacing of, preferably about 25 cms. Each of the soil working members 23 comprises a support 23A, at least substantially horizontal, its extremities being fitted with soil working elements 23B, being of tine-like formation and extending downwardly.

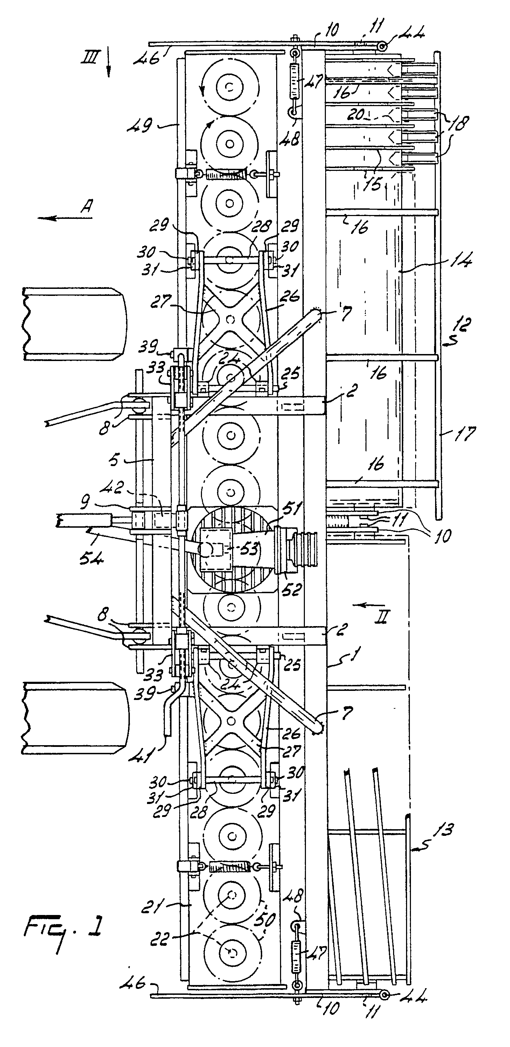

For fixing the box-like frame beam 21, bearing housings 24 are provided at a mutual spacing on the sides of the support beams 2, turned away from one another, these housings supporting a shaft 25, extending into the intended direction of travel A and situated at least substantially parallel to a support beam 2. The shaft 25 comprises pivotable arms 26, leaning against the front-resp. rear side of the bearing housings and extending laterally, with a cross connection linking the pivotable arms (Fig. 3). The extremities of the arms 26, turned away from a support beam 2, brought closer to one another through a flexion (Fig. 1), are interconnected by means of a shaft 28, extending at least substantially parallel to the shaft 25. A shackle 29 can pivot freely about the extremities of the shaft 28, these extremities protruding from the arms 26. Each shackle 29 is fixed, freely pivotably, at its other end by means of a pin 30 to a support 31 near the front resp. rear side of the box-like frame portion 21.

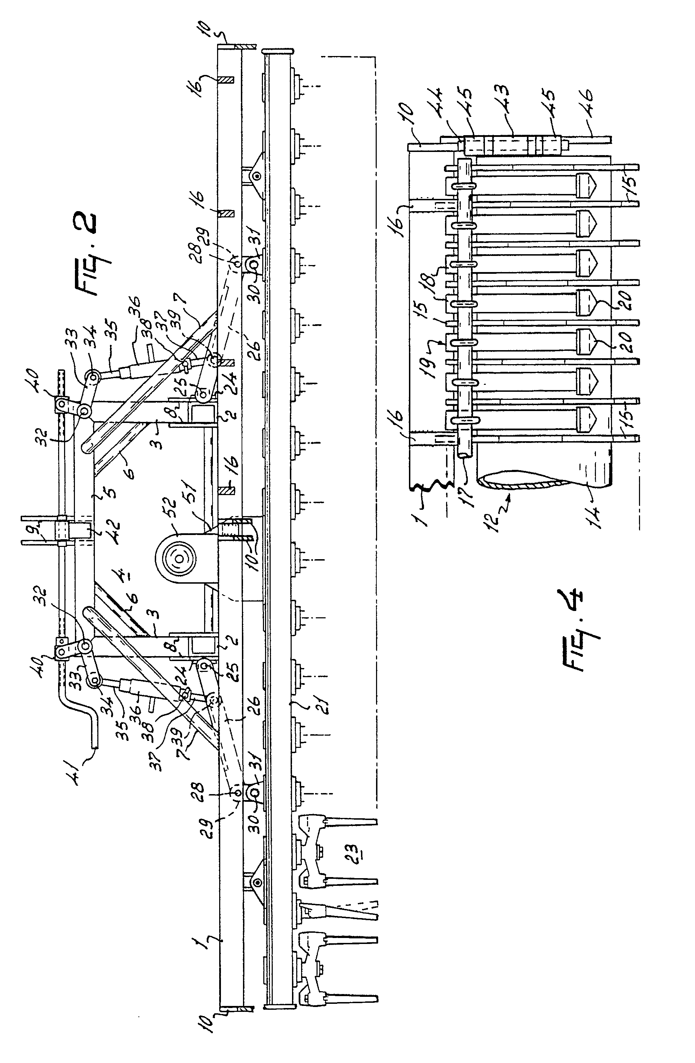

Each of the top corners of the rectangular trestle 4 (Fig. 2) comprises a shaft 32, extending to the intended direction of travel A. About each shaft 32 a bushing of a tumbler 33 is pivotable, each of these tumblers comprising two pairs of arms, spaced apart. Between the extremities of the lowermost arms of each tumbler 33, an extremity of a rod 35 is, pivotably fixed by means of pin 34 with a tubular component 36 being fixed, by means of screw-thread, onto this rod, making possible the adjustment of this component with respect to the rod.

At the lowermost part, the tubular component 36 is provided with a rod 37, which can be shifted within the tubular component and which can be fixed with respect to the tubular component by means of a pin 38, which allows conducting through corresponding orifices. The other extremity of the rod 37 is pivotably fitted by means of a pin 39, provided at the front side of the foremost pivotable arm 26. Between the extremities of the uppermost arms of the respective tumblers 33 a screw spindle 41 is provided by means of a pivotable bushing-shaped component 40 with screw-thread, this screw spindle extending transversely to the intended direction of travel A and at least substantially parallel to the topmost side of the rectangular trestle 4.

By means of the shackles 29, pivotable arms 26, rods 37 and tubular components 36 a pivotable suspension is obtained for the box-like frame portion 21, this frame portion being allowed to move upwardly in a vertical plane during machine operation. If the pins 38 are inserted, the total of the rods 37, components 36, rods 35, tumblers 33 and the adjustment member 41, in the version of a screw spindle, constitutes a system of rods, allowing a pivotable movement and also enabling the frame portion to move. This mobility can be eliminated by placing a lock 42, provided pivotably near the centre of the screw spindle 41 between the lips 9 (Fig. 2 and 3).

Each of the supports 10 is provided, at the rear side, with a bushing 43 in which a shaft 44, projecting into an upright, preferably vertical direction, is supported, with bushings 45 being pivotable about this shaft (Fig. 3). The bushings 45 are assembled to the inner side of a plate 46, extending at least substantially parallel to a vertical plane in the intended direction of travel A of the machine and occupying, during machine operation, a position as shown in the Figures 1 and 3. The plate 46 is fitted, near the middle on the inner side, with a coil spring 47, which has its other end hooked into an aperture in a lip 48 situated at the rear side of the frame beam 1 (Fig. 3 and 5). The plate 46 is pulled against the support 10 by means of the spring.

Seen in side view, the plate 46 is mainly rectangular, with the lowermost part of the substantially vertical front extending obliquely, partly downwardly and rearwardly. At the rear, the plate initially extends obliquely, from the horizontal lowermost part, rearwardly and upwardly, then inclining into the virtually vertical rear side, comprising the bushings 45. It will be seen in Fig. 3 that the plate 46 extends from before the frame portion 21 to behind the axis of rotation of the rollers 12, resp. 13, with the coil spring gripping the plate at least substantially near the centre between the back side of the frame portion 21 and the front of the rollers 12, resp. 13.

In the proximity of the frame portion 21, a protection 49 being of an angle iron-like formation is provided at the level of the supports 23A of the soil working members 23, with the aid of which protection stones or other hard objects, present in the soil during machine operation, can be stopped and conducted downwardly in the soil that has been loosened by the soil working members. The protection 49 being spring-loaded, it can pivot forwardly, all this in such a manner that hard objects, possibly getting between the supports 23A of the soil working members 23 and the back side of the protection, can be dismissed.

Within the box-like frame portion 21, each of the shafts 22 of a soil working member 23 is provided with a gear 50 with straight toothing, all this in such a manner that the gears on the shafts of adjacent soil working members 23 are in a mutually driving relation. Near the centre, the shaft of a soil working member 23 is extended upwardly, this extension reaching into a gear box 51, provided on the topmost part of the box-likeframe section 21. Within the gear box 51 the extension is engaged, through a conical gear transmission and a speed variation system 52, situated at the rear side of the gear box 51, with a shaft 53, extending to the intended direction of travel and protruding from the gear box at the front. The end of the shaft 53, protruding from the gear box, can be coupled to the tractor PTO-shaft through an intermediate shaft 54.

The operation of the assembly described before is as follows. During its operation, the machine is linked to the three-point lifting device of a tractor by means of the three-point attachment provided on the rectangular trestle4 and each of the soil working members 23 can be made to rotate from the tractor PTO-shaft through the intermediate shaft 54 and the transmission, as described before. In this process, adjacently situated soil working members rotate in mutually opposite directions, as shown by the arrows in Fig. 1, with the soil working elements 23B extending downwardly and being of tine-like formation, working at least adjacent strips of soil.

As mentioned before, the box-like frame portion 1, supporting the soil working members 23, is held by a support construction, situated behind the frame portion and comprising the single frame beam 1, supported by means of the adjacent rollers 12, resp. 13, occupying a fixed position with respect to the frame beam. The support frame is provided with coupling means, situated in front of the frame portion, these means being connected with the frame beam 1 through the support beams 2, extending in the intended direction of travel, and these means comprising the trestle 4, which is linked with the three-point lifting device of the tractor during machine operation. During machine operation and starting from a certain working depth, the box-like frame portion 21 with the soil working members 23, supported by it, is allowed to move freely, in height and vertically, to a certain extent, through the pivotal connection, embracing the shackles 29 and the pivotable arms 26, and having at least two pivotable shafts, extending in the intended direction of travel A. In the process a rod 37 shifts upwardly with respect to the tubular component 36.

As mentioned before, a movement in upward direction of the box-like frame portion 1 can be eliminated by means of the pins 38 and the lock 42. With the aid of the screw spindle 41, the position of the pivotable arms 26 can be changed through the tumblers 33, as a result of which the working depth of the soil working members 23 is adjusted.

If necessary, a further adaption can be obtained by twisting the tubular components 36 with respect to the rods 35 so that an accurate setting is possible.

If the lock 42 is not situated between the plates 9, the assembly may move farther, with pin 38 fitted, about the pivotable axes 32 before the tumblers 33, so that, beside an individual, vertical height movement by means of every pivotable connection, comprising the pivotable arms 26 and the shackles 29, a total oscillatory movement is possible for the box-like frame portion 1, supporting the soil working members 23.

By means of the plates 46, fitted on both sides, an effective conjunction with the outer soil working members 23 can be obtained, resulting in an efficient crumbling and distribution of the soil near the sides of the row of soil working members. In the process, each plate 46 can deflect about the pivotable shaft 44, against the action of spring 47, this axis being situated at the rear side and extending at least substantially in a vertical plane, making possible an adaption to the structure of the soil and the quantity to be worked. Moreover, the plate can deflect sideways when hitting hard objects, after which the plate will be immediately restored to its original position against the action of the spring 47.

The plate 46 occupying a fixed position with respect to the supporting rollers 12, resp. 13, the lowermost side of the plate will invariably be in the position as shown in Fig. 3. If packer rollers 12 are provided, it can be achieved by means of the scrapers 19, fitted collectively to the tubular holder 17, that soil, possibly lodging between the crenelated tines 15, is scraped off. In the process, the soil is caught from the middle by the point of the V-shaped part of the scraping plate section 20, to be subsequently loosened gradually into the direction of the respective tine crenelations and - as is evident from Fig. 3 - to be smoothed out close over the soil surface, all this in such a manner that virtually no clods are left behind on the tilled strip of land.

By means of the support frame described before comprising a single frame beam, situated behind the soil working members, this beam being connected with a linkage trestle via support beams 2, resp. 2A, extending forwardly over the row of soil working members, this beam moreover being supported by means of at least one support member 12, resp. 13, a simple and yet strong construction is obtained for the fixation of a frame portion 21, holding the soil working members 23. The assembly is allowed to be compact in that the frame portion, holding the soil working members, is transposable in a vertical direction with respect to the support frame, enabled to do so by the specific pivotal connection. The pivotal connection also comprises means for the working depth adjustment of the soil working members.

## Claims

1. Soil cultivating implement, comprising a number of soil working members (23), which members (23) are juxtaposed and placed in a row that extends transversely to the intended direction of travel (A) of the implement, the soil working members (23) being supported in a frame portion (21) that extends transversely to the intended direction of travel (A) and by means of at least two spaced apart pairs of axes (25, 28) is connected to at least one transverse beam (1) of a support frame, so as to be upwardly and downwardly movable during operation, the said support frame being provided with coupling means (8, 9) situated in front of the frame portion (21) with respect to the intended direction of travel (A), for linkage to the lift system of a tractor, characterized in that the said support frame comprises a single frame beam (1) which is situated to the rear of the said frame portion (21) and by means of forwardly extending support beams (2) is connected to the said coupling means (8, 9), each of said pairs of axes (25,28) extending in the direction of travel (A) of the implement and affording the pivots for an arm (26) that extends transversely and is pivotably connected to a support beam (2) and to the said frame portion (21) respectively.

2. Soil cultivating implement as claimed in claim 1, characterized in that two support beams (2), mutually spaced apart, are provided, each of these beams (2) comprising a pivotal connection (25) for a said arm (26).

3. Soil cultivating implement as claimed in claim 1 or 2, characterized in that the said pivotable arm (26), is pivotably connected, by means of a shackle (29), to the frame portion (21).

4. Soil cultivating implement as claimed in any one of the preceding claims, characterized in that means, through which the working depth of the soil working members can be altered, comprise an adjustment member (41), with the aid of which a said pivotable arm (26) is adjustable in height.

5. Soil cultivating implement as claimed in claim 4, characterized in that two pivotal arms (26), provided at mutual spacings, are provided and that a common adjustment member (41) is available for both arms (26).

6. Soil cultivating implement as claimed in claim 5, characterized in that the adjustment member (41) constitutes, in conjunction with the pivotal arms (26), a pivotal system of rods for the frame portion (21), all this in such a way that a movement in height of the frame portion (21) is possible by means of the system of rods.

7. Soil cultivating implement as claimed in claim 6, characterized in that a lock (42) is available to forestall a movement of the adjustment member (41) as part of the system of rods.

8. Soil cultivating implement as claimed in any one of the preceding claims, characterized in that the said frame beam (1) is supported by at least one supporting member (13), preferably through two supporting members (13), situated adjacently and of roller-like formation.

## Revendications

1. Machine pour cultiver le sol, comprenant un certain nombre d'organes de travail du sol (23) qui sont juxtaposés et disposés en une rangée qui s'étend transversalement au sens de marche (A) prévu pour le travail de la machine, les organes de travail du sol (23) étant supportés dans une partie de chassis (21) qui s'étend transversalement au sens de marche (A) prévu et est reliée, au moyen d'au moins deux paires d'axes (25, 28) espacées entre elles, à au moins une poutre transversale (1) d'un chassis de support, de manière à être mobile vers le haut et vers le bas pendant le travail, ledit chassis de support étant muni de moyens d'accouplement (8, 9) situés en avant de la partie de chassis (21) par rapport au sens de marche (A) prévu, pour assurer la liaison au système de levage d'un tracteur, **caractérisée** en ce que ledit chassis de support comporte une seule poutre de chassis (1) qui est située à l'arrière de ladite partie de chassis (21) et est reliée, au moyen de poutres de support (2) s'étendant vers l'avant, auxdits moyens d'accouplement (8, 9), chacune desdites paires d'axes (25, 28) s'étendant dans le sens de marche (A) de la machine et constituant les pivots pour un bras (26) qui s'étend transversalement et est relié, respectivement, de manière pivotante, à une poutre de support (2) et à ladite partie de chassis (21).

2. Machine pour cultiver le sol, selon la revendication 1, caractérisée en ce qu'il est prévu deux poutres de support (2), espacées entre elles, chacune de ces poutres (2) comprenant une liaison à pivot (25) pour un desdits bras (26).

3. Machine pour cultiver le sol, selon la revendication 1 ou 2, caractérisée en ce que ledit bras pivotant (26) est relié de manière pivotante au moyen d'une manille (29) à la partie de chassis (21).

4. Machine pour cultiver le sol, selon l'une quelconque des revendications précédentes, caractérisée en ce que des moyens permettant de modifier la profondeur de travail des organes de travail du sol comprennent un organe de réglage (41) à l'aide duquel un desdits bras pivotants (26) est réglable en hauteur.

5. Machine pour cultiver le sol, selon la revendication 4, caractérisée en ce qu'il est prévu deux bras pivotants (26) espacés entre eux et en ce qu'un organe de réglage commun (41) est prévu pour les deux bras (26).

6. Machine pour cultiver le sol, selon la revendication 5, caractérisée en ce que l'organe de réglage (41) constitue, conjointement aux bras pivotants (26), un système articulé de bielles pour la partie de chassis (21), tout ceci de telle manière qu'un mouvement en hauteur de la partie de chassis (21) soit possible au moyen du système de bielles.

7. Machine pour cultiver le sol, selon la revendication 6, caractérisée en ce qu'un verrou (42) est prévu pour empêcher un mouvement de l'organe de réglage (41) en tant que partie du système de bielles.

8. Machine pour cultiver le sol, selon l'une quelconque des revendications précédentes, caractérisée en ce que ladite poutre de chassis (1) est supportée par au moins un organe de support (13), de préférence par deux organes de support (13) situés en position adjacente et ayant la forme de rouleaux.

## Ansprüche

1. Bodenbearbeitungsgerät mit mehreren Bodenbearbeitungsgliedern (23), die überlappend und in einer Reihe angeordnet sind, welche quer zur Arbeitsrichtung (A) des Gerätes verläuft, wobei die Bodenbearbeitungsglieder (23) in einem Gestellteil (21) abgestützt sind, das sich quer zu der Arbeitsrichtung (A) erstreckt und durch mindestens zwei mit Abstand voneinander liegende Paare von Achsen (25, 28) mit mindestens einem Querbalken (1) eines Tragrahmens derart verbunden ist, daß es im Betrieb aufwärts und abwärts beweglich ist, wobei der Tragrahmen an seiner in Arbeitsrichtung vorderen Seite Anschlüsse (8, 9) für die Lenker des Hebesystems eines Schleppers aufweist, dadurch gekennzeichnet, daß der Tragrahmen einen einzigen Rahmenbalken (1) aufweist, sich im Bereich der Rückseite des Gestellteiles (21) befindet und mittels nach vorne gerichteter Träger (2) mit den Anschlüssen (8, 9) verbunden ist, daß jedes Paar Achsen (25, 28) in Arbeitsrichtung (A) des Gerätes ausgerichtet ist und die Gelenke für einen Arm (26) bildet, der sich quer erstreckt und gelenkig mit einem Träger (2) sowie dem Gestellteil (21) verbunden ist.

2. Bodenbearbeitungsmaschine nach Anspruch 1, dadurch gekennzeichnet, daß zwei Träger (2) mit gegenseitigem Abstand vorgesehen sind, wobei jeder dieser Träger (2) eine Gelenkverbindung (25) für den Arm (26) aufweist.

3. Bodenbearbeitungsmaschine nach Anspruch 1 oder 2, dadurch gekennzeichnet, daß der schwenkbare Arm (26) mittels einer Lasche (29) mit dem Gestellteil (21) verbunden ist.

4. Bodenbearbeitungsmaschine nach einem der vorhergehenden Ansprüche, dadurch gekennzeichnet, daß eine zur Änderung der Arbeitstiefe der Bodenbearbeitungsglieder vorgesehene Vorrichtung ein Stellglied (41) aufweist, mit dem der schwenkbare Arm (26) höhenverstellbar ist.

5. Bodenbearbeitungsmaschine nach Anspruch 4, dadurch gekennzeichnet, daß zwei schwenkbare Arme (26) mit Abstand voneinander vorgesehen sind, und daß ein gemeinsames Stellglied (41) für beide Arme (26) betätigbar ist.

6. Bodenbearbeitungsmaschine nach Anspruch 5, dadurch gekennzeichnet, daß das Stellglied (41) zusammen mit den schwenkbaren Armen (26) ein Gelenkgestänge für das Gestellteil (21) bildet, derart, daß mittels des Gelenkgestänges eine Höhenbewegung des Gestellteiles (21) erzielbar ist.

7. Bodenbearbeitungsmaschine nach Anspruch 6, dadurch gekennzeichnet, daß eine Verriegelung (42) zum Blockieren des Stellgliedes (31) in dessen Eigenschaft als Teil des Gelenkgestänges vorgesehen ist.

8. Bodenbearbeitungsmaschine nach einem der vorhergehenden Ansprüche, dadurch gekennzeichnet, daß der Rahmenbalken (1) durch mindestens ein in seiner Nähe angeordnetes, walzenförmiges Stützglied (13), vorzugsweise durch zwei solcher Stützglieder (13) getragen ist.

Fig. 1

FIG. 2

FIG. 4

FIG. 3